# EUROPÄISCHE PATENTSCHRIFT

(11) **EP 1 034 923 B1**
(45) Veröffentlichungstag und Bekanntmachung des Hinweises auf die Patenterteilung: **04.09.2002**
(21) Anmeldenummer: 00103433.9
(22) Anmeldetag: 25.02.2000
(51) Int. Cl.: B41F 13/012, F16H 55/18

(54) **Vorrichtung zur Vermeidung von Zahnradspiel in Getrieben**
Device for avoiding backlash in toothed gearings
Dispositif pour éviter un jeu mécanique dans des boîtes d'engrenages

(30) Priorität: 10.03.1999 US 265621
(43) Veröffentlichungstag der Anmeldung: 13.09.2000
(73) Patentinhaber: Heidelberger Druckmaschinen Aktiengesellschaft, 69115 Heidelberg (DE)
(72) Erfinder: Gardiner, John Patrick, Londonderry, NH 03053 (US)
(74) Vertreter: Kesselhut, Wolf

(56) Entgegenhaltungen:
- DE-A- 3 336 669
- DE-A- 3 527 765
- US-A- 2 663 198
- US-A- 2 966 806
- US-A- 3 035 454
- US-A- 4 660 432
- US-A- 5 813 335

## Beschreibung

Die Erfindung betrifft eine Vorrichtung zur Vermeidung von Zahnradspiel in Getrieben, insbesondere in Getrieben von Rollenrotations-Druckmaschinen, gemäß dem Oberbegriff von Anspruch 1.

Die in Druckmaschinen eingesetzten Hochleistungs-Antriebsmotoren erfordern Getriebe, die sowohl Beschleunigungsdrehmomente als auch Abbremsdrehmomente übertragen können, ohne dass dadurch aufgrund des normalerweise auftretenden Spiels zwischen den Zahnrädern des Getriebes ein Positionsfehler verursacht wird. Bei sich mit einer sehr hohen Geschwindigkeit drehenden Zahnrädern neigen die miteinander in Eingriff stehenden Zähne eines ersten Zahnrads und eines zugeordneten zweiten Zahnrads, z. B. eines Antriebszahnrads und eines Abtriebszahnrads, dazu, sich in Umfangsrichtung voneinander zu trennen, und bei der Veränderung des Drehmoments, d. h. bei einem Lastwechsel am Antriebszahnrad, entstehen aufgrund der Massenträgheit der über das Getriebe angetriebenen Komponenten Probleme, die auf das Flankenspiel der Zahnräder zurückzuführen sind. So geraten die Zähne insbesondere bei schnelllaufenden Druckmaschinen aufgrund der kinetischen Energie der Druckmaschinenzylinder beim Abbremsen der Druckmaschine leicht außer Eingriff, wodurch es zum Dublieren oder zu sogenannten Rattermarken kommen kann, die zu einer erheblichen Beeinträchtigung des Druckbildes führen.

Die US 4,660,432 beschreibt eine Vorrichtung zur Vermeidung von Zahnradspiel zwischen einem Antriebszahnrad und einem Abtriebszahnrad, bei dem ein erstes, gegenüber dem Antriebszahnrad frei drehbares Beiläuferzahnrad sowie ein ebenfalls frei drehbares weiteres Beiläuferzahnrad über mit einer Gummierung oder gummielastischen Schicht versehene Stifte unmittelbar nebeneinanderliegend in vorspannbarer Weise miteinander gekoppelt sind.

Die US 3,035,454 beschreibt eine Vorrichtung zur Vermeidung von Zahnradspiel, bei der ein Beiläuferzahnrad über sich in radiale Richtung erstreckende Blattfedern mit einem Antriebszahnrad drehelastisch gekoppelt ist.

Die US 5,813,335 beschreibt eine Vorrichtung zur Verhinderung von Spiel, bei der ein Antriebszahnrad und ein zusätzliches Zahnrad vorgesehen sind. In dem zusätzlichen Zahnrad, nachfolgend allgemein auch als Abtriebszahnrad bezeichnet, ist eine Ausnehmung gebildet, in der eine Blattfederanordnung aufgenommen ist, welche die Zähne des zusätzlichen Zahnrads derart vorspannt, dass sich dieses zur Vermeidung von Spiel bezüglich der Zähne des angetriebenen Zahnrads entgegengesetzt zu dem Antriebszahnrad dreht. Dabei muss das zusätzliche Zahnrad jedoch von minimaler Größe (minimalem Durchmesser) sein, um die Blattfederanordnung aufnehmen zu können. Die Länge der Blattfedern zur Erzeugung der Spielausgleichskräfte ist ferner gering, so dass die Blattfedern eine unerwünscht hohe Federkonstante besitzen. Aufgrund der komplexen Präzisionserfordernisse ist diese Anordnung darüber hinaus sehr kostenintensiv in der Herstellung.

Demgemäß ist es eine Aufgabe der vorliegenden Erfindung, eine Vorrichtung zur Vermeidung von Spiel zwischen einem Antriebszahnrad und einem Abtriebszahnrad zu schaffen, bei der die erwähnten Nachteile der Vorrichtungen des Standes der Technik beseitigt werden, die weniger kompliziert in der Herstellung ist und bei welcher der Zahnraddurchmesser und die Federkonstante der Federn reduziert werden können.

Diese Aufgabe wird durch die Merkmale des Anspruchs 1 gelöst.

Weiter Merkmale der Erfindung ergeben sich aus den Unteransprüchen.

Die erfindungsgemäße Vorrichtung zur Vermeidung von Zahnradspiel umfasst ein drehfest auf einer Antriebswelle angeordnetes Antriebszahnrad mit einer Vielzahl von darin gebildeten Durchsteckbohrungen, welches mit einem Abtriebszahnrad in Zahneingriff ist, um dieses spielfrei anzutreiben. Die Vorrichtung umfasst ferner einen an dem Antriebszahnrad befestigten Stabring, ein beilaufendes Zahnrad mit einer Vielzahl von darin gebildeten, den Durchsteckbohrungen des Antriebszahnrads entsprechenden Durchsteckbohrungen, einen an dem beilaufenden Zahnrad befestigten Kraftring mit einer Vielzahl von darin gebildeten Aufnahmebohrungen, und fliegend gelagerte federnde oder torsionselastische Stäbe, die an einem Ende an dem Stabring befestigt sind und durch die Vielzahl von Durchsteckbohrungen in dem Antriebszahnrad und dem beilaufenden Zahnrad bis zu den Aufnahmebohrungen verlaufen, und die das beilaufende Zahnrad und das Antriebszahnrad in einander entgegengesetzte Richtungen vorspannen.

Ein weiteres Merkmal der Erfindung besteht darin, dass die Vielzahl von Durchsteckbohrungen in dem Antriebszahnrad und in dem beilaufenden Zahnrad und die Vielzahl von Aufnahmebohrungen vorzugsweise jeweils zueinander versetzt angeordnet sind.

Die federnden Stäbe verlaufen vorzugsweise durch die Vielzahl von Durchsteckbohrungen in dem Antriebszahnrad und dem beilaufenden Zahnrad, ohne das jeweilige Zahnrad zu berühren.

Das beilaufende Zahnrad weist vorzugsweise eine Nabe auf, an welcher der Kraftring befestigt ist.

Die federnden Stäbe können ferner als fliegend gelagerte federnde Stäbe ausgebildet sein, welche durch die Durchsteckbohrungen bis in den Kraftring verlaufen und dabei entlang ihrer Länge gebogen sind, so dass die Kraft zum Vorspannen des beilaufenden Zahnrads und des Antriebszahnrads in entgegengesetzte Richtungen entsteht.

Der Umfang des Kraftrings weist gemäß einem weiteren Ausführungsbeispiel der Erfindung vorzugsweise eine Kerbe auf, welche einen Sechskantschlüssel aufnehmen kann, mittels dessen der Kraftring gedreht werden kann.

Gemäß einem zusätzlichen Merkmal der Erfindung ist das beilaufende Zahnrad koaxial mit dem Antriebszahnrad und an dieses angrenzend auf der Antriebswelle angeordnet und frei um die Antriebswelle drehbar.

In dem Antriebszahnrad kann ferner eine Bohrung gebildet sein, in der eine Buchse aufgenommen sein kann.

Die Buchse weist vorzugsweise eine konische, gestufte Innenbohrung auf. An dem beilaufenden Zahnrad kann ferner eine Gewindebohrung ausgebildet sein, die einen Gewindezapfen umfasst, dessen eines Ende der konischen, gestuften Innenbohrung der Buchse entsprechend geformt ist und dessen anderes Ende ein Gewinde aufweist und in der Gewindebohrung angeordnet ist. Der Gewindezapfen wirkt mit der Buchse zusammen und dient in einer ersten Position einerseits dazu, das beilaufende Zahnrad mit dem Antriebszahnrad auszurichten und in einer zweiten Position andererseits dazu, die Bewegung des beilaufenden Zahnrads bezüglich des Antriebszahnrads zu begrenzen.

Der Kraftring weist ferner vorzugsweise eine Bohrung auf, die mit der Gewindebohrung des beilaufenden Zahnrads ausrichtbar ist, so dass der in der Gewindebohrung angeordnete Zapfen zugänglich wird.

Die Merkmale der vorliegenden Erfindung werden in der folgenden Beschreibung bevorzugter Ausführungsbeispiele im Zusammenhang mit den beigefügten, nachstehend aufgeführten Zeichnungen näher erläutert.

Es zeigen:
- Fig. 1: eine schematische, perspektivische Explosionsansicht einer erfindungsgemäßen Vorrichtung zur Vermeidung von Spiel;
- Fig. 2: eine perspektivische Draufsicht auf eine zusammengebaute erfindungsgemäße Vorrichtung;
- Fig. 3: eine Vorderansicht der erfindungsgemäßen Vorrichtung;
- Fig. 4: eine Seitenansicht der erfindungsgemäßen Vorrichtung; und
- Fig. 5: eine Rückansicht der erfindungsgemäßen Vorrichtung.

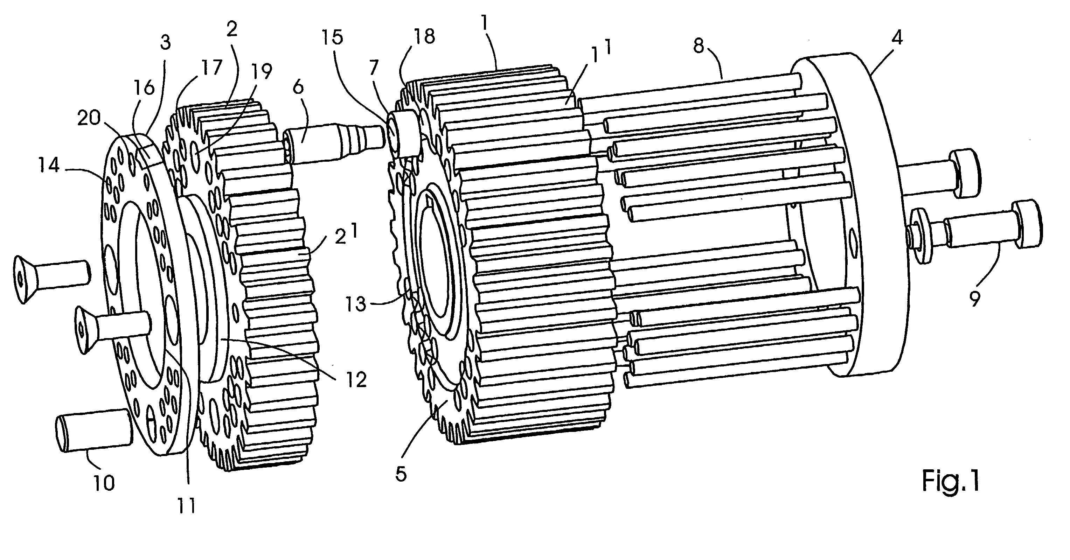

In den Zeichnungen werden gleiche Elemente mit identischen Bezugszeichen bezeichnet. Fig. 1 zeigt eine perspektivische Explosionsansicht einer erfindungsgemäßen Vorrichtung zur Vermeidung von Zahnradspiel, welches ein Antriebszahnrad 1 mit Zähnen 1' und ein beilaufendes Zahnrad 2 mit Zähnen 2' umfasst. Das beilaufende Zahnrad 2 bewirkt eine Drehmomentkomponente zur Vermeidung von Zahnradspiel. Das Antriebszahnrad 1 und das beilaufende Zahnrad 2 sind vorzugsweise aneinander angrenzend derart auf einer gemeinsame Welle angeordnet werden, dass sie zusammen in ein nicht gezeigtes drittes Zahnrad eingreifen, welches breit genug ist, um in die Zähne 1', 2' beider koaxial angeordneter Zahnräder 1, 2 einzugreifen, und welches nachfolgend auch als Abtriebszahnrad bezeichnet wird. Die Zähne 1' des Antriebszahnrads 1 drücken gegen eine Seite der Zähne des dritten Zahnrads, während die Zähne 2' des beilaufenden Zahnrads 2 gegen die andere Seite der Zähne des Abtriebszahnrads drücken. Das Antriebszahnrad 1 ist drehfest und das beilaufende Zahnrad 2 ist drehbar auf der gemeinsamen Welle angeordnet.

An einer Seite des Antriebszahnrads 1 ist ein Stabring 4 vorgesehen, welcher mittels Bundbolzen 9 exakt in seiner Position am Antriebszahnrad 1 gehalten wird. An dem Stabring 4 ist eine Vielzahl von fliegend gelagerten federnden oder federelastischen Stäben 8 befestigt, welche sich von dem Stabring 4 in die in dem Antriebszahnrad 1 und dem beilaufenden Zahnrad 2 gebildeten Durchsteckbohrungen 13 bzw. 17 erstrecken. Die federnden Stäbe 8 verlaufen vorzugsweise berührungsfrei durch die Durchsteckbohrungen 13, 17 und dienen als Auslegerträger oder Auslegerfeder zur Erzeugung eines Drehmoments zur Vermeidung von Zahnradspiel zwischen dem Antriebszahnrad 1 und dem Abtriebszahnrad. Die Durchsteckbohrungen 13, 17 in den Zahnrädern 1, 2 sind in Drehrichtung versetzt und erlauben so eine Biegung der federnden Stäbe 8. Um eine Nabe 12 des beilaufenden Zahnrads 2 ist ein drehbarer Kraftring 3 angeordnet, dessen Drehposition mittels eines in den Kraftring 3 und eine Bohrung in dem beilaufenden Zahnrad 2 einfügbaren Positionierzapfens 10 fixiert ist. Der Kraftring 3 wird ferner von zwei Schrauben 11 in seiner Position an dem beilaufenden Zahnrad 2 gehalten. Der Kraftring 3 weist darüber hinaus eine Vielzahl von in Drehrichtung versetzten, den Durchsteckbohrungen 17 des beilaufenden Zahnrads 2 entsprechenden Aufnahmebohrungen 14 auf, welche vorzugsweise die Enden der aus dem beilaufenden Zahnrad 2 heraustretenden federnden Stäbe 8 aufnehmen. Der Kraftring 3 ist in einer Weise an dem beilaufenden Zahnrad 2 befestigt, dass die Position der Aufnahmebohrungen 14 eine mit einem Ausleger vergleichbare Biegung der federnden Stäbe 8 bewirkt, wenn diese in die Aufnahmebohrungen 14 eingefügt werden. Die Biegeebene der fliegend gelagerten federnden Stäbe 8 verläuft senkrecht zu der Radialen der Getriebeanordnung. Die Biegung erzeugt ein Drehmoment zwischen den angrenzenden Zahnrädern 1, 2, welche sich durch eine kreisförmige Anordnung einer Vielzahl von federnden Stäben 8 auf einen jeweils gewünschten Wert erhöhen lässt.

Die federnden Stäbe 8 erzeugen zwischen den koaxial angeordneten Zahnrädern 1, 2 eine Torsionskraft. In einem statischen Zustand üben die Zahnräder 1, 2 eine identische, aber entgegengesetzt gerichtete Kontaktkraft auf die Zähne des nicht gezeigten Abtriebszahnrads aus, so dass auf das Abtriebszahnrad insgesamt keine Antriebskraft wirkt. Wird auf das Antriebszahnrad 1 eine Antriebskraft ausgeübt, so wird dieses Kräftegleichgewicht aufgehoben und die Zahnräder werden in Bewegung gesetzt, wobei die Kontaktkraft der Zähne des drehfest angeordneten Antriebszahnrads 1 erhöht wird. Im Falle eines entgegengesetzten Drehmoments wird die Kontaktkraft der Zähne des Antriebszahnrads 1 reduziert, bleibt jedoch aufgrund der Federkraft der federnden Stäbe 8 größer als Null, begrenzt durch die Federkraft der federnden Stäbe 8.

Zum Ausrichten des beilaufenden Zahnrads 2 während des Zusammenbaus und der

Demontage der erfindungsgemäßen Vorrichtung zur Vermeidung von Zahnradspiel, bzw. zur Begrenzung der maximalen Verschiebung der Zähne 1', 2' gegeneinander, ist vorzugsweise eine gehärtete Buchse 7 und ein Zapfen 6 vorgesehen. Die gehärtete Buchse 7 ist in eine in der Seite des Antriebszahnrads 1 geformte Gegenbohrung eingefügt und weist eine konische Einfügefläche 15 auf, deren Form der des zugeordneten Endes des Zapfens 6 entspricht, um einen Übergang zwischen der Ausrichtungsfunktion und der Funktion der Begrenzung der gegenseitigen Verschiebung der Zähne 1', 2'zu ermöglichen. Der Zapfen 6 ist in einer Gewindebohrung 19 in dem beilaufenden Zahnrad 2 angeordnet. Die Bewegung des Zapfens 6 von der gehärteten Buchse 7 weg wird vorzugsweise durch den Kraftring 3 begrenzt. In dem Kraftring 3 ist eine Bohrung 20 vorgesehen, welche groß genug ist, um den Zugang zu einem Sechskantkopf des Zapfens 6 zu ermöglichen, die jedoch kleiner als der Durchmesser des Zapfens 6 ist. Auf diese Weise kann die Position des Zapfens 6 über die Bohrung 20 in dem Kraftring 3 mittels eines Sechskantschlüssels durch einfaches Hinein- und Hinausdrehen des Zapfens 6 verstellt werden. Dadurch kann die Position des Zapfens 6 in geeigneter Weise eingestellt werden, um eine gewünschte Verschiebung zu ermöglichen, so dass der Zapfen 6 seiner Doppelfunktion ausüben kann.

Der Kraftring 3 weist vorzugsweise eine Kerbe 16 oder eine andere Ausnehmung auf, in welche ein Werkzeug, z. B. ein Sechskantschlüssel eingreifen kann, mittels dessen der Kraftring 3 gedreht werden kann.

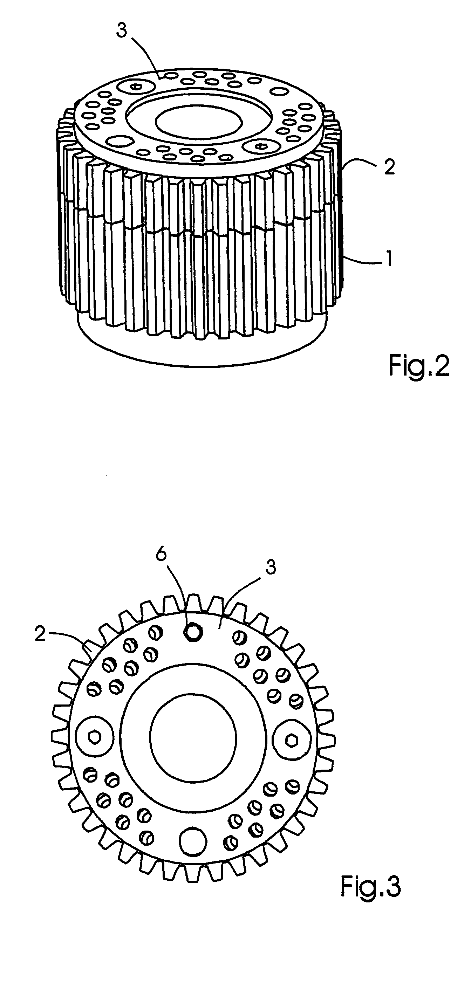

Fig. 2 zeigt eine perspektivische Darstellung der erfindungsgemäßen Vorrichtung zur Vermeidung von Zahnradspiel im zusammengebauten Zustand.

Fig. 3 zeigt eine Vorderansicht der zusammengebauten Vorrichtung vom Kraftring 3 aus betrachtet.

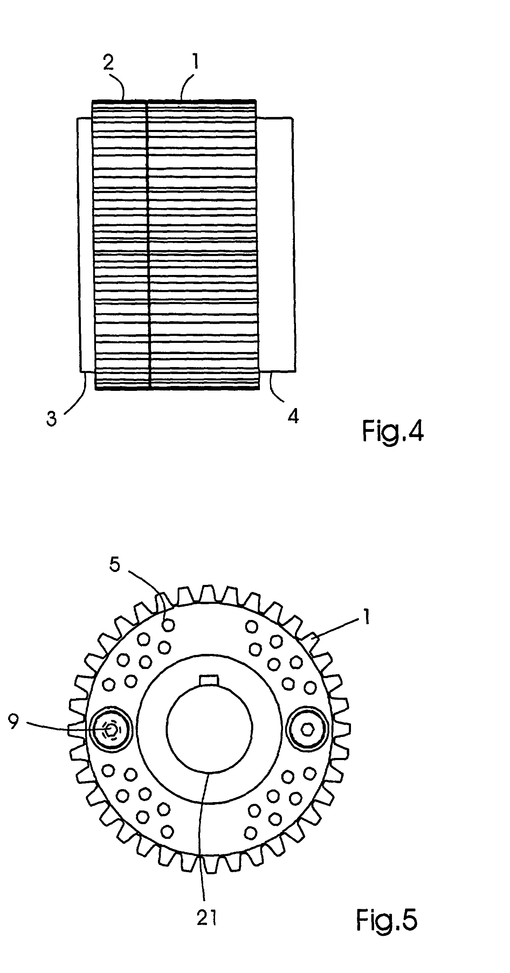

Fig. 4 zeigt eine Seitenansicht der erfindungsgemäßen Vorrichtung in zusammengebautem Zustand, und Fig. 5 zeigt eine Rückansicht der zusammengebauten Vorrichtung von dem auf einer Antriebswelle 21 befestigten Stabring 4 aus betrachtet.

Ein weiterer Einsatzbereich der vorliegenden Erfindung sind z. B. ruhiglaufende Antriebsvorrichtungen. In einer derartigen Umgebung können die federnden Stäbe 8 Drehmomente zwischen einem angetriebenen Zahnrad und einem Abtriebszahnrad übertragen. Die niedrige Federkonstante in Verbindung mit einer vergleichsweise hohen angetriebenen Masse bewirkt eine geringe Eigenfrequenz, wie sie zum Dämpfen von Antriebsstörungen wünschenswert ist.

### Liste der Bezugszeichen

- 1: Antriebszahnrad
- 1': Zähne
- 2: beilaufendes Zahnrad
- 2': Zähne
- 3: Kraftring
- 4: Stabring
- 6: Zapfen
- 7: gehärtete Buchse
- 8: federnde Stäbe
- 9: Bundbolzen
- 10: Positionierzapfen
- 11: Schrauben
- 12: Nabe
- 13: Durchsteckbohrungen
- 14: Aufnahmebohrungen
- 15: konische Einfügefläche
- 16: Kerbe
- 17: Durchsteckbohrungen
- 18: Gegenbohrung
- 19: Gewindebohrung
- 20: Bohrung
- 21: Antriebswelle

## Patentansprüche

1. Vorrichtung zur Vermeidung von Zahnradspiel zwischen einem drehfest auf einen Antriebswelle angeordneten Antriebszahnrad (1) und einem Abtriebszahnrad, insbesondere zum Antrieb von Druckmaschinenzylindern in einer Rollenrotations-Offsetdruckmaschine, wobei diese Vorrichtung folgende Merkmale umfaßt:
eine Vielzahl von im Antriebszahnrad (1) gebildeten Durchsteckbohrungen (13), ein am Antriebszahnrad (1) befestigter Stabring (4), ein beilaufendes Zahnrad (2) mit einer Vielzahl von darin gebildeten, den Durchsteckbohrungen (13) des Antriebszahnrades (1) zugeordneten weiteren Durchsteckbohrungen (17), ein mit dem beilaufenden Zahnrad (2) verbundener Kraftring (3) mit einer Vielzahl von darin . angeordneten Aufnahmebohrungen (14); sowie federelastische Elemente (8), welche mit ihrem einen Ende am Stabring (4) befestigt sind und welche sich durch die Vielzahl von Durchsteckbohrungen (13, 17) im Antriebszahnrad (1) sowie im beilaufenden Zahnrad (2) hindurch bis zu den Aufnahmebohrungen (14) des Kraftrings (3) erstrecken und eine Kraft ausüben, durch die das beilaufende Zahnrad (2) und das Antriebszahnrad (1) in entgegengesetzten Richtungen vorspannbar sind.

2. Vorrichtung nach Anspruch 1,
**dadurch gekennzeichnet,**
**dass** die Vielzahl von Durchsteckbohrungen (13, 17) im Antriebszahnrad (1) und im beilaufenden Zahnrad (2) und die Vielzahl von Aufnahmebohrungen (14) im Kraftring (3) in Drehrichtung der Zahnräder betrachtet zueinander versetzt angeordnet sind.

3. Vorrichtung nach Anspruch 2,
**dadurch gekennzeichnet,**
**dass** die federelastischen Elemente (8) berührungsfrei durch die Durchsteckbohrungen (13, 17) im Antriebszahnrad (1) und im beilaufenden Zahnrad (2) verlaufen.

4. Vorrichtung nach einem der vorhergehenden Ansprüche,
**dadurch gekennzeichnet,**
**dass** zur Befestigung des Kraftrings (3) eine Nabe (12) am beilaufenden Zahnrad (2) vorgesehen ist.

5. Vorrichtung nach einem der vorhergehenden Ansprüche,
**dadurch gekennzeichnet,**
**dass** die federelastischen Elemente (8) als federelastische Stäbe ausgebildet sind, welche vergleichbar mit einem Ausleger in ihrem Verlauf von dem Stabring (4) zu dem Kraftring (3) gebogen werden, so dass sie eine Kraft ausüben, durch welche das beilaufende Zahnrad (2) und das Antriebszahnrad (1) in entgegengesetzten Richtungen zueinander vorspannbar sind.

6. Vorrichtung nach einem der vorhergehenden Ansprüche,
**dadurch gekennzeichnet,**
**dass** am Umfang des Kraftring (3) eine Kerbe (16) ausgebildet ist, in die zum Drehen des Kraftrings (3) ein Werkzeug eingreifen kann.

7. Vorrichtung nach einem der vorhergehenden Ansprüche,
**dadurch gekennzeichnet,**
**dass** das beilaufende Zahnrad (2) und das Antriebszahnrad (1) koaxial und aneinander angrenzend auf einer Antriebswelle (21) montierbar sind und dass das beilaufende Zahnrad (2) um die Antriebswelle (21) frei drehbar ist.

8. Vorrichtung nach einem der vorhergehenden Ansprüche,
**dadurch gekennzeichnet,**
**dass** im Antriebszahnrad (1) eine Bohrung (18) gebildet ist, und dass das Antriebszahnrad (1) eine in der Bohrung angeordnete Buchse (7) umfasst.

9. Vorrichtung nach Anspruch 8,
**dadurch gekennzeichnet,**
**dass** die Buchse (7) eine konische, gestufte Innenbohrung aufweist, dass im beilaufenden Zahnrad (2) eine Gewindebohrung (19) gebildet ist, und dass ein Gewindezapfen (6) vorgesehen ist, welcher ein entsprechend der konischen, gestuften Innenbohrung der Buchse (7) geformtes Ende und ein in der Gewindebohrung (19) angeordnetes Gewindeende aufweist und welcher mit der Buchse (7) derart zusammenwirkt, dass das beilaufende Zahnrad (2) mit dem Antriebszahnrad (1) ausrichtbar und eine Bewegung des beilaufenden Zahnrads (2) bezüglich des Antriebszahnrads (1) begrenzbar ist.

10. Vorrichtung nach Anspruch 9,
**dadurch gekennzeichnet,**
**dass** im Kraftring (3) eine Bohrung (20) vorgesehen ist, welche mit der Gewindebohrung (19) des beilaufenden Zahnrads (2) in einer Weise ausrichtbar ist, dass der in der Gewindebohrung (19) angeordnete Zapfen (6) zugänglich ist.

## Claims

1. Device for avoiding backlash between a drive gear (1) firmly arranged on a drive shaft so as to rotate with it and a driven gear, in particular for driving press cylinders in a web-fed rotary offset press, this device comprising the following features:
a large number of through holes (13) formed in the drive gear (1), a pin ring (4) fixed to the drive gear (1), a corotating gear (2) having a large number of further through holes (17) formed therein and
associated with the through holes (13) in the drive gear (1), a force ring (3) that is connected to the corotating gear (2) and has a large number of receiving holes (14) arranged therein; and also resilient elements (8), which are fixed to the pin ring (4) by their one end and which extend through the large number of through holes (13, 17) in the drive gear (1) and in the corotating gear (2) as far as the receiving holes (14) in the force ring (3) and exert a force by means of which the corotating gear (2) and the drive gear (1) can be prestressed in opposite directions.

2. Device according to Claim 1, **characterized in that** the large number of through holes (13, 17) in the drive gear (1) and in the corotating gear (2), and the large number of receiving holes (14) in the force ring (3), are arranged to be offset in relation to one another as viewed in the direction of rotation of the gears.

3. Device according to Claim 2, **characterized in that** the resilient elements (8) run without contact through the through holes (13, 17) in the drive gear (1) and in the corotating gear (2).

4. Device according to one of the preceding claims, **characterized in that** in order to fix the force ring (3), a hub (12) is provided on the corotating gear (2).

5. Device according to one of the preceding claims, **characterized in that** the resilient elements (8) are formed as resilient rods which, in their course from the pin ring (4) to the force ring (3), are bent in a way comparable with an outrigger, so that they exert a force by means of which the corotating gear (2) and the drive gear (1) can be prestressed in opposite directions in relation to each other.

6. Device according to one of the preceding claims, **characterized in that** on the circumference of the force ring (3) a notch (16) is formed, in which a tool can engage in order to rotate the force ring (3).

7. Device according to one of the preceding claims, **characterized in that** the corotating gear (2) and the drive gear (1) can be mounted coaxially and adjacent to each other on a drive shaft (21), and **in that** the corotating gear (2) can rotate freely about the drive shaft (21).

8. Device according to one of the preceding claims, **characterized in that** a hole (18) is formed in the drive gear (1), and **in that** the drive gear (1) comprises a bush (7) arranged in the hole.

9. Device according to Claim 8, **characterized in that** the bush (7) has a conical, stepped inner bore, **in that** a threaded hole (19) is formed in the corotating gear (2), and **in that** a threaded pin (6) is provided, which has an end shaped to correspond to the conical, stepped inner bore of the bush (7) and a threaded end arranged in the threaded hole (19) and which interacts with the bush (7) in such a way that the corotating gear (2) can be aligned with the drive gear (1) and a movement of the corotating gear (2) with respect to the drive gear (1) can be limited.

10. Device according to Claim 9, **characterized in that** a hole (20) is provided in the force ring (3) and can be aligned with the threaded hole (19) in the corotating gear (2) in such a way that the pin (6) arranged in the threaded hole (19) is accessible.

## Revendications

1. Dispositif destiné à éviter un jeu de denture entre une roue dentée d'entraînement ou menante (1), qui est disposée sur un arbre d'entraînement en y étant liée de manière fixe en rotation, et une roue dentée menée, notamment pour l'entraînement de cylindres de machine à imprimer dans une rotative d'impression offset en continu, ce dispositif présentant les caractéristiques suivantes :
un grand nombre d'alésages de passage (13) formés dans la roue dentée menante (1), un anneau à tiges (4) fixé à la roue dentée menante (1), une roue dentée attenante accompagnante (2) dans laquelle sont formés un grand nombre d'autres alésages de passage (17) associés aux alésages de passage (13) de la roue dentée menante (1), un anneau d'effort (3) relié à la roue dentée attenante accompagnante (2) et dans lequel sont placés un grand nombre d'alésages de réception (14), ainsi que des éléments élastiques (8), qui sont fixés par une extrémité à l'anneau à tiges (4) et s'étendent à travers le grand nombre d'alésages de passage (13, 17) dans la roue dentée menante (1) ainsi que de la roue dentée attenante accompagnante (2), jusqu'aux alésages de réception (14) de l'anneau d'effort (3), et exercent une force par laquelle la roue dentée attenante accompagnante (2) et la roue dentée menante (1) peuvent être précontraintes dans des directions opposées.

2. Dispositif selon la revendication 1, **caractérisé en ce que** le grand nombre d'alésages de passage (13, 17) dans la roue dentée menante (1) et dans la roue dentée attenante accompagnante (2) et le grand nombre d'alésages de réception (14) dans l'anneau d'effort (3) sont disposés de manière mutuellement décalée dans la direction de rotation des roues dentées.

3. Dispositif selon la revendication 2, **caractérisé en ce que** les éléments élastiques (8) s'étendent sans contact à travers les alésages de passage (13, 17) dane la roue dentée menante (1) et dans la roue dentée attenante accompagnante (2).

4. Dispositif selon l'une des revendications précédentes, **caractérisé en ce que** pour la fixation de l'anneau d'effort (3), il est prévu un moyeu (12) sur la roue dentée attenante accompagnante (2).

5. Dispositif selon l'une des revendications précédentes, **caractérisé en ce que** les éléments élastiques (8) sont réalisés sous la forme de tiges élastiques, qui de manière comparable à un bras en porte-à-faux, sont fléchies sur leur étendue de l'anneau à tiges (4) à l'anneau d'effort (3), de sorts qu'elles exercent une force par laquelle la roue dentée attenante accompagnante (2) et la roue dentée menante (1) peuvent être précontraintes dans des directions opposées.

6. Dispositif selon l'une des revendications précédentes, **caractérisé en ce qu'**à la périphérie de l'anneau d'effort (3) est formée une encoche (16) dans laquelle peut venir s'engager un outil destiné à faire tourner l'anneau d'effort (3).

7. Dispositif selon l'une des revendications précédentes, **caractérisé en ce que** la roue dentée attenante accompagnante (2) et la roue dentés menante (1) peuvent être montées sur un arbre d'entraînement (21) de manière coaxiale en étant directement adjacentes l'une à l'autre, et **en ce que** la roue dentée attenante accompagnante (2) peut tourner librement autour de l'arbre d'entraînement (21).

8. Dispositif selon l'une des revendications précédentes, **caractérisé en ce que** dans la roue dentée menante (1) est formé un alésage (18), et **en ce que** la roue dentée menante (1) comprend une douille (7) disposée dans l'alésage.

9. Dispositif selon la revendication 8, **caractérisé en ce que** la douille (7) présente un alésage intérieur étagé conique, **en ce que** dans la roue attenante accompagnante (2) est formé un alésage taraudé (19), et **en ce qu'**il est prévu un tourillon fileté (6) qui présente une extrémité formée conformément à l'alésage intérieur étagé conique de la douille (7), et une extrémité filetée placée dans l'alésage taraudé (19) et qui coopère avec la douille (7) de manière telle, que la roue dentée attenante accompagnante (2) puisse être alignée avec la roue dentée menante (1) et qu'il soit possible de limiter un mouvement de la roue dentée attenante accompagnante (2) par rapport à la roue dentée menante (1).

10. Dispositif selon la revendication 9, **caractérisé en ce que** dans l'anneau d'effort (3) est prévu un alésage (20) qui peut être aligné avec l'alésage taraudé (19) de la roue dentée attenante accompagnante (2) de façon que le tourillon (6) disposé dans l'alésage taraudé (19) soit accessible.
